# EUROPÄISCHE PATENTSCHRIFT

(11) **EP 0 479 964 B1**
(45) Veröffentlichungstag und Bekanntmachung des Hinweises auf die Patenterteilung: **02.05.1997**
(21) Anmeldenummer: 91906255.4
(22) Anmeldetag: 27.03.1991
(51) Int. Cl.: C08J 5/18, C08L 3/02, C08B 30/12, B32B 9/00

(54) **MEHRSCHICHTENFOLIE, TEILWEISE BESTEHEND AUS STÄRKE**
MULTIPLE LAYER FOIL PARTIALLY COMPOSED OF STARCH
FEUILLE A PLUSIEURS COUCHES PARTIELLEMENT COMPOSEE D'AMIDON

(30) Priorität: 26.04.1990 CH 1426/90
(43) Veröffentlichungstag der Anmeldung: 15.04.1992
(73) Patentinhaber: Bio-tec Biologische Naturverpackungen GmbH, D-46446 Emmerich (DE)
(72) Erfinder: Tomka, Ivan, Dr., CH-1722 Bourguillon (CH)
(74) Vertreter: Troesch Scheidegger Werner AG
(86) Internationale Anmeldenummer: CH9100078
(87) Internationale Veröffentlichungsnummer: WO9116375

(56) Entgegenhaltungen:
- EP-A- 0 327 505
- EP-A- 0 400 531
- WO-A-90/05161
- WO-A-90/14938
- WO-A-91/02025
- BE-A- 654 605
- FR-A- 1 293 184
- GB-A- 1 014 801
- US-A- 4 016 117
- Chemical Abstracts, Band 84, Nr. 6, 9. Februar 1976, (Columbus, Ohio, US), siehe Seite 44, abstract 32072a & JP-A-75110445
- WPIL, Host Epoque, AN = 83-714177 (29), Derwent Publications Ltd, (London, GB), & JP-A-58098251 (SUMITOMO BAKELITE)

## Beschreibung

Die vorliegende Erfindung befasst sich mit einer Mehrschichtenfolie mit geringer Gaspermeabilität, mit einem Verfahren zur Herstellung einer Mehrschichtenfolie sowie mit einem Verfahren zur Herstellung eines Polymer-Blends für eine Mehrschichtfolie.

Für die Verpackung von zum Beispiel sauerstoffsensitiven Gütern, wie beispielsweise Lebensmitteln, ist es wichtig, dass das Verpackungsmittel eine geringe Gaspermeabilität, d.h. im genannten Beispiel eine geringe Sauerstoffdurchlässigkeit aufweist.

Weitere Anforderungen an derartige Verpackungsmaterialien sind, dass sie feuchtigkeitsunempfindlich sind, ausreichende mechanische Eigenschaften aufweisen, je nach Anwendung transparent sind sowie dass sie billig sind.

Insbesondere zum Verpacken von Lebensmitteln sind Folien aus PVC bekannt sowie heute, noch wesentlich mehr verbreitet, Folien aus Polyvinylidenchlorid resp. PVDC, wie beispielsweise aus "Saran". Die Gaspermeabilität dieser Materialien wie auch die Feuchtigkeitsunempfindlichkeit sind ausgezeichnet. Diese Materialien haben aber den grossen Nachteil, dass ihre Entsorgung, infolge des Gehaltes an Chlor, nicht unbedenklich ist, da beim Verbrennungsprozess Chlorwasserstoff entsteht.

Aus diesem Grunde werden diese chlorhaltigen Folien vermehrt durch sog. Verbundfolien ersetzt, wie beispielsweise Mehrschichtfolien aus einer Polyamidschicht und einer Polyaethylenschicht oder einer Polyaethylen- und einer Polyvinylalkoholschicht. Der Variationsmöglichkeiten von verschiedenen Verbundfolien sind keine Grenzen gesetzt. Damit diese unterschiedlichen Polymermaterialien gut aneinander haften, werden beispielsweise Zwischenschichten aus sog. Blockcopolymeren vorgeschlagen, die als sog. Phasenvermittler dienen.

Bei diesen Verbundfolien bildet beispielsweise die Polyamidschicht eine gute Sauerstoffbarriere, und anderseits ist die Polyaethylenschicht für die Wasserundurchlässigkeit verantwortlich. Je nach Eigenschaften der einzelnen Polymere und der erforderlichen Eigenschaften der Folie können die Schichten beliebig angeordnet werden. Bekannt sind beispielsweise Drei-, Vier-, Fünf- oder Mehrfachschichtfolien.

Die Herstellung dieser Mehrfachschichtfolien ist aber relativ teuer, müssen doch einerseits Massnahmen ergriffen werden, dass die Haftung zwischen den einzelnen Schichten gut ist, und auch sind die gewählten Polymere, wie beispielsweise Polyamid, relativ teure Rohstoffe.

Obwohl diese Polymere, verglichen mit chlorhaltigen Polymeren, wie PVC oder PVDC, wesentlich unbedenklicher sind in bezug auf die Entsorgung, ist ihre Entsorgung trotzdem nicht problemlos. Kunststoffe aus Polyaethylen, Polyamid, Polypropylen usw. werden auch heute noch weitgehendst verbrannt, da sie biologisch nur schwer oder kaum abbaubar sind. Auch ist das sog. Recycling dieser Kunststoffe kaum oder nur schwerlich realisierbar.

In der BE-645 605 wird die Herstellung einer Folie beschrieben durch Mischen von 50-95% Stärke mit Wasser sowie mit einem Plastifiziermittel. Für die Herstellung von Folien ist ein derart hoher Wassergehalt nicht von Vorteil, da die Gefahr von Blasenbildungen, Schlieren und dgl. bei der Extrusion besteht.

In der WO-A-90/14938 wird die Herstellung von Folien und laminierten Produkten beschrieben, bestehend unter anderem aus destrukturierter Stärke, welche Produkte eine erhöhte Sauerstoffbarriere aufweisen. Auch in der WO-A-91/02025 wird die Verwendunq von destrukturierter Stärke zusammen mit anderen Polymeren in Form von Polymerblends beschrieben, welche Polymerblends für die Herstellung von Folien verwendet werden. Den beiden genannten Dokumenten im Stand der Technik ist gemeinsam, dass immer von destrukturierter Stärke ausgegangen wird, welche durch Destrukturieren von nativer Stärke mit Wasser erhalten wird.

In der WO-A-90/05161 schlussendlich wird die Verwendung von thermoplastisch verarbeitbarer Stärke für die Herstellung von Folien beschrieben, welche thermoplastisch verarbeitbare Stärke durch Destrukturieren von Stärke weitgehendst unter Ausschluss von Wasser erfolgt.

Die drei obgenannten, internationalen Patentanmeldungen waren am Prioritätstag der vorliegenden Patentanmeldung noch nicht veröffentlicht.

Es ist daher eine Aufgabe der vorliegenden Erfindung, eine Folie für die Verpackung von Gütern zu schaffen, die eine geringe Gaspermeabilität, wie beispielsweise Sauerstoffdurchlässigkeit, aufweist und die im weiteren im wesentlichen feuchtigkeitsunempfindlich ist.

Eine weitere Aufgabe der vorliegenden Erfindung liegt in der Schaffung eines Polymerwerkstoffes, der sich mindestens teilweise für die Herstellung einer derartigen Folie eignet.

Erfindungsgemass wird diese Aufgabe durch eine Mehrschichtfolie mit geringer Gaspermeabilität gemäss dem Wortlaut nach Anspruch 1 gelöst.

Vorgeschlagen wird eine Mehrschichtfolie bestehend aus mindestens einer Schicht aus thermoplastisch verarbeitbarer Stärke, enthaltend mindestens 20 Gew,% eines Zuschlagstoffes, sowie bds. der einen Schicht aus je mindestens einer weiteren Schicht, die aus einem Polyolefin oder einem Polymerblend besteht. Der Polymerblend ist erhältlich durch Mischen von thermoplastisch verarbeitbarer Stärke, enthaltend mindestens 20 Gew.% eines Zuschlagstoffes mit einem Polyolefin.

Folien, welche mindestens eine Schicht aus thermoplastisch verarbeitbarer Stärke enthalten, weisen die geforderte geringe Gaspermeabilität auf, und zudem ist die Entsorgung von Stärke unproblematisch, ist sie doch biologisch leicht abbaubar.

Die mindestens je weitere Schicht ist aus einem Polyolefin oder einem Polymer-Blend hergestellt, wobei der Blend nebst der thermoplastisch verarbeitbaren Stärke weiter ein Polyolefin aufweist. Durch diese Massnahme wird die Feuchtigkeitsempfindlichkeit der Folie stark reduziert.

Dabei wird vorgeschlagen, dass die mindestens eine weitere Schicht aus einem Polyolefin, wie Polyäthylen und/oder Polypropylen besteht oder aus einem Polymer-Blend, der aus thermoplastisch verarbeitbarer Stärke mit Polyaethylen und/oder Polypropylen sowie einem Phasen- oder Haftvermittler hergestellt ist, wobei der Phasen- oder Haftvermittler zur Verbesserung der Haftung zwischen den zwei Polymeren dient.

Gemäss der vorliegenden Erfindung wird weiter vorgeschlagen, dass die mindestens eine Schicht erhalten wird ausgehend von thermoplastisch verarbeitbarer Stärke mit einem Wassergehalt von <3,5 Gew.%.

Bei einer Variante der erfindungsgemässen Folie ist vorgesehen, dass die Folie beidseitig der mindestens einen Schicht mindestens je eine weitere Schicht umfasst, die aus einem Polyolefin und/oder einem Polymer-Blend aus thermoplastisch verarbeitbarer Stärke mit einem Polyolefin bestehen. Beim Polyolefin handelt es sich vorzugsweise um Polyaethylen und/oder Polypropylen. Die weiteren Schichten bestehen dann ausschliesslich aus einem Polyolefin, wenn an die Feuchtigkeitsundurchlässigkeit der Folie sehr hohe Anforderungen gestellt werden.

Je nach den Anforderungen an die Haftung zwischen den verschiedenen Schichten ist vorgesehen, dass zwischen der mindestens einen Schicht und je der einen weiteren Schicht eine Zwischenschicht aus einem Blockcopolymer als Phasen- oder Haftvermittler zwischen den Schichten vorgesehen ist. Eine Zwischenschicht aus dem Blockcopolymer wird vorzugsweise dann vorgesehen, wenn die mindestens eine Schicht im wesentlichen ausschliesslich aus thermoplastisch verarbeitbarer Stärke besteht und die beiden weiteren Schichten im wesentlichen hauptsächlich aus dem Polyolefin hergestellt sind. Je grösser der Anteil der thermoplastisch verarbeitbaren Stärke in der je einen weiteren Schicht ist, um so weniger notwendig ist die Anordnung einer Zwischenschicht aus dem Blockcopolymer.

Gemäss einer weiteren Variante der erfindungsgemässen Folie ist vorgesehen, dass die Folie mindestens auf einer Seite eine Aluminium- und/oder eine Siliciumoxyd-, wie vorzugsweise eine Siliciummonoxydbeschichtung aufweist.

Die Beschichtung von Aluminium oder dem Siliciumoxyd wird in einer Grössenordnung von 0,1 - 0,4 µm (100 bis 400 A) aufgetragen. Siliciumoxyd, wie vorzugsweise Siliciummonoxyd, wird dann als Beschichtung der Folie gewählt, wenn die Transparenz der Folie weitgehendst erhalten bleiben soll. Die Beschichtung der Folie mit Aluminium oder Siliciumoxyd erfolgt vorzugsweise durch Bedampfen der Folie im Hochvakuum.

Gemäss einer weiteren Variante der erfindungsgemässen Folie wird vorgeschlagen, dass die Folie mindestens auf einer Seite eine Siloxanbeschichtung aufweist, die mindestens teilweise mit sich selbst und/oder mit der Stärke vernetzt ist. Die Siloxanbeschichtung der Folie wird dadurch erreicht, dass mindestens auf einer Seite der Folie ein Siloxanmonomer, wie beispielsweise ein Alkylsiloxan, aufgetragen wird und anschliessend das Siloxan mit einer Elektronenstrahlkanone behandelt wird, wodurch das Siloxan mit sich selbst und teilweise mit der Stärke an der Oberfläche der Folie vernetzt wird. Durch Zusatz eines Photosensibilisators zum Siloxanmonomer oder zur Stärke kann die Vernetzung zusätzlich erhöht werden.

Die Beschichtung der Folie mit dem Siloxanmonomer erfolgt vorzugsweise mittels der sog. Tauchbeschichtung, wobei die Folie in ein Bad, enthaltend das Siloxanmonomer, eingetaucht wird und anschliessend der Siloxanfilm mittels eines Rakels erzeugt wird. Die Eindringtiefe bei der Vernetzung beträgt ca. 7 bis 10µm, je nach der gewählten Energie in der UV-Quelle oder im Elektronenstrahl.

Die Beschichtung der Folie mit dem Siloxan kann ein- oder beidseitig erfolgen.

Als Alkylsiloxane eignen sich insbesondere Diethoxydimethylsilan oder Tetraethoxysilan. Die Applikation des Siloxanmonomers erfolgt vorzugsweise in einer Dicke von 1 µm.

Gemäss einer weiteren Variante der erfindungsgemässen Folie wird vorgeschlagen, dass die thermoplastisch verarbeitbare Stärke mit Borax, Magnesium-2+Ionen und/oder Kalzium-2+Ionen oder anderen mehrwertigen Kationen versetzt ist. Dies wird dadurch erreicht, dass bei der Herstellung der thermoplastisch verarbeitbaren Stärke diese entweder mit Borax, Magnesiumsulfat oder Kalziumkarbonat versetzt wird. Der Vorteil dieser Zusätze liegt darin, dass die Wasserempfindlichkeit der Stärke dadurch reduziert werden kann.

Die vorab erwähnten Mehrschichtfolien können nach den bekannten und üblichen Herstellverfahren von Folien hergestellt werden. So kann beispielsweise die mindestens eine Schicht der Folie, die im wesentlichen aus thermoplastisch verarbeitbarer Stärke besteht, mittels Breitschlitzextrusion oder durch Blasen von thermoplastisch verarbeitbarer Stärke oder eines Polymer-Blends, bestehend aus thermoplastisch verarbeitbarer Stärke mit einem Polyolefin, wie vorzugsweise Polyaethylen oder Polypropylen, hergestellt werden. Die Blas- resp. Extrusionsbedingungen richten sich dabei nach dem Schmelzpunkt des gewählten Polymers.

Analog ist es möglich, beispielsweise eine Dreischichtfolie mittels Breitschlitzkaschierens oder Blaskoextrusion von mindestens drei Schichten herzustellen, wobei die mindestens eine Schicht, bestehend im wesentlichen aus thermoplastisch verarbeitbarer Stärke, beidseits durch je eine weitere Schicht überdeckt wird, die aus einem Polyolefin und/oder einem Polymer-Blend aus thermoplastisch verarbeitbarer Stärke und einem Polyolefin, wie vorzugsweise Polyaethylen oder Polypropylen, hergestellt wird. Je nach Bedarf ist es im weiteren möglich, zwischen die mindestens eine Schicht und die je eine weitere Schicht eine Zwischenschicht vorzusehen, bestehend aus einem Blockcopolymer, für die Erhöhung der Haftung zwischen den Schichten.

Auch im vorliegenden Fall richten sich die Extrusions- resp. Blasbedingungen nach den Schmelzbereichen der gewählten Polymere resp. Polymer-Blends, wobei die Extrusionsbedingungen für die thermoplastisch verarbeitbare Stärke 210°C nicht wesentlich überschreiten sollten, da ansonsten ein Abbau in der Stärke festzustellen ist.

Weiter vorgeschlagen wird ein Polymer-Blend, bestehend aus einem Polyolefin und Stärke, der sich insbesondere für die Herstellung einer vorab beschriebenen erfindungsgemässen Folie eignet. Dieser Polymer-Blend wird erhalten durch Mischen eines Polyolefines, wie beispielsweise Polyaethylen oder Polypropylen, mit thermoplastisch verarbeitbarer Stärke mit einem Wassergehalt < 3,5Gew%, wobei der Stärkeanteil an der Gesamtmischung 70Gew% nicht überschreiten soll. Vorzugsweise beträgt der Anteil der thermoplastisch verarbeitbaren Stärke 30 bis 70Gew%, bezogen auf das Gesamtgewicht des Polymer-Blends.

Insbesondere wird der Polymer-Blend dadurch erhalten, dass das Polyolefin, wie Polyaethylen oder Polypropylen, mit der Stärke in einem Kneter oder Extruder in einem Temperaturbereich von 150°C bis 200°C, vorzugsweise 160°C bis 190°C gemischt wird, wobei der Temperaturbereich sich nach dem Schmelzbereich des gewählten Polyolefines richtet.

Vorzugsweise wird weiter ein Phasenvermittler zugegeben, bei welchem es sich um ein Blockcopolymer handelt, welches üblicherweise bei der Herstellung von Mehrschichtfolien als Zwischenschicht verwendet wird, oder aber bei der Herstellung von Polymer-Blends aus polaren und unpolaren Polymeren.

Zur Herstellung eines derartigen Polymer-Blends mit Stärke ist es wesentlich, dass thermoplastisch verarbeitbare Stärke verwendet wird. Bekannt sind beispielsweise Polymer-Blends aus Polyaethylen mit 40% einer wenigstens teilweise destrukturierten Stärke, wobei die Destrukturierung im wesentlichen unter Verwendung von Wasser erfolgt ist. Formkörper, hergestellt aus derartigen Polymer-Blends, sind spröde, und die Herstellung von Folien ist im wesentlichen ausgeschlossen. Dies nicht zuletzt auch aufgrund des hohen Wassergehaltes in der destrukturierten Stärke.

Demgegenüber ist es mit den oben erfindungsgemäss erwähnten Polymer-Blends möglich, unter Verwendung von vorzugsweise 30 bis 70Gew% an thermoplastisch verarbeitbarer Stärke, einwandfreie Folien und Formkörper herzustellen, deren mechanische resp. physikalische Eigenschaften nicht wesentlich von denjenigen des Polyolefines abweichen. Dabei richtet sich die Menge der verwendeten thermoplastisch verarbeitbaren Stärke nach der geforderten Feuchtigkeitsunempfindlichkeit des Polymer-Blends, wobei auch bei Verwendung von 70% Stärke nach wie vor eine ausreichende Feuchtigkeitsunempfindlichkeit erreicht wird. So wird beispielsweise ein derartiger Polymer-Blend erst bei Aussetzen an 100%ige Luftfeuchtigkeit an seiner Oberfläche klebrig. Hingegen ist dieser Polymer-Blend selbst bei 70% Luftfeuchtigkeit und Raumtemperatur problemlos lagerbar.

Bei den für die oben erwähnten erfindungsgemässen Folien oder für den erwähnten Polymer-Blend wird die Verwendung von thermoplastisch verarbeitbarer Stärke vorgeschlagen, welche durch Mischen von Stärke und- oder einem Stärkederivat mit mindestens 20Gew% eines Zuschlagstoffes, durch Zuführen von thermischer und- oder mechanischer Energie, sowie von wenigstens teilweise Abziehen der natürlich gebundenen Feuchtigkeit in der Stärke erhalten wird, wobei der Zuschlagstoff mindestens eine der nachfolgenden Substanzen umfasst:
- Glycerin,
- ein Aminoalkohol,
- DMSO,
- N-Methylacetamid,
- Harnstoff.

Vorzugsweise umfasst die thermoplastisch verarbeitbare Stärke einen Wassergehalt < 3,5%, vorzugsweise < 1 Gew%.

Zur Herstellung der thermoplastisch verarbeitbaren Stärke wird vorgeschlagen, dass die Stärke und/oder ein Stärkederivat mit mindestens 20Gew%, vorzugsweise 25 bis 45Gew%, eines Zuschlagstoffes unter Zuführen von mechanischer Energie in der Form einer Deformationsenergie in der Grössenordnung von 0,25 bis 0,5 kWh/kg Stärke/Zuschlagstoffmischung gemischt wird, wobei die Mischung mindestens auf eine Temperatur erhitzt wird, um ein Mischen der Komponenten zu einer homogenen Masse zu ermöglichen, und wobei der mindestens eine Zuschlagstoff mindestens eine der oben erwähnten Substanzen umfasst.

Im Gegensatz zu den bis heute üblichen Verfahren zur Destrukturierung von nativer Stärke, bei welchen die Destrukturierung weitgehendst unter Zuhilfenahme von Wasser erfolgt, wird gemäss dem vorliegend vorgeschlagenen Verfahren eine thermoplastisch verarbeitbare Stärke erhalten, die problemlos gemäss den bekannten Extrusions- und Spritzgiessverfahren verarbeitbar ist und mittels welcher Formkörper und Extrudate herstellbar sind, die ausgezeichnete mechanische Eigenschaften aufweisen. Insbesondere weist die thermoplastisch verarbeitbare Stärke im Gegensatz zu mit Wasser destrukturierter Stärke ein hervorragendes Spannungs-/Dehnungsverhalten auf, das sich auch bei Alterung nicht verschlechtert.

So sind Formkörper aus thermoplastisch verarbeitbarer Stärke in Grenzen biegfähig, währenddem Formkörper aus mit Wasser destrukturierter Stärke weitgehendst spröde sind, dies vor allem nach einer gewissen Alterungsdauer.

Gemäss einer Variante des oben vorgeschlagenen Verfahrens wird Stärke mit 25 bis 40Gew%, bevorzugt 32 bis 38Gew% eines Aminoalkohols, wie Aminoaethanol, Aminopropanol und/oder Trishydroxylaethylaminomethan gemischt, wobei die Mischung je nach Art des Zuschlagstoffes und Menge des Zuschlagstoffes in einem Temperaturbereich von 60°C bis 120°C in einem Extruder oder Kneter unter Zuführen einer Deformationsenergie von 0,3 bis 0,36 kWh/kg Stärke-/Aminoaethanolgemisches zu einer homogenen Masse verarbeitet wird. Die natürliche Feuchtigkeit der Stärke wird dabei entweder vor dem Mischen mit dem Aminoalkohol durch Trocknen entzogen oder aber beim Mischen, beispielsweise im Kneter oder Extruder, gemäss den bekannten Verfahren, beispielsweise durch Entlüften, abgezogen.

Gemäss einer weiteren Variante wird die Stärke oder das Stärkederivat mit 30 bis 45Gew%, bevorzugt 34 bis 40Gew% Glycerin gemischt und je nach Menge Zuschlagstoff in einem Temperaturbereich von 120°C bis 180°C in einem Extruder oder Kneter unter Zuführen einer Deformationsenergie von 0,3 bis 0,36 kWh/kg Stärke-Glyceringemisch zu einer homogenen Masse verarbeitet. Die natürliche Feuchtigkeit der Stärke wird im vorliegenden Fall durch Entlüften im Extruder oder Kneter im wesentlichen abgezogen.

Zur Reduzierung der Feuchtigkeitsempfindlichkeit der thermoplastisch verarbeitbaren Stärke ist es vorteilhaft, bis zu 20Gew%, vorzugsweise ca. 10Gew%, des Zuschlagstoffes durch Borax, Magnesiumsulfat oder Kalziumkarbonat bei der Herstellung der thermoplastisch verarbeitbaren Stärke zu ersetzen.

Die oben erwähnte thermoplastisch verarbeitbare Stärke wie auch der Polymer-Blend eignen sich insbesondere für die Herstellung einer oder mehrerer Schichten in den oben erwähnten erfindungsgemässen Folien. Selbstverständlich können diese Werkstoffe auch für die Herstellung von Extrudaten oder Spritzgussformlingen verwendet werden.

Die Erfindung wird nun nachfolgend unter Bezug auf die beigefügten Figuren sowie anhand von Beispielen näher erläutert.

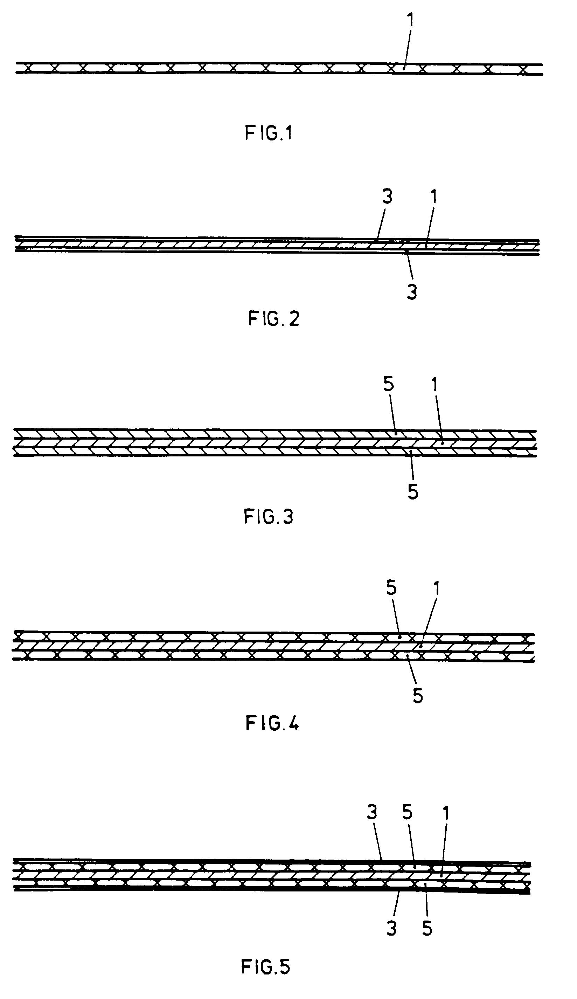

Dabei zeigen die Fig. 1 bis 5 anhand von Beispielen mögliche Aufbauvarianten teilweise von erfindungsgemässen Folien.

In Fig. 1 ist eine Einschichtfolie dargestellt, welche eine einzige Schicht 1 umfasst. Diese eine Schicht besteht aus einem Polymer-Blend, hergestellt aus einem Polyolefin und thermoplastisch verarbeitbarer Stärke. Dabei kann der Anteil thermoplastisch verarbeitbarer Stärke 30 bis 70Gew%, bezogen auf das Gesamtgewicht des Polymer-Blends, betragen. Der Anteil thermoplastisch verarbeitbarer Stärke richtet sich nach den Anforderungen an die Feuchtigkeitsempfindlichkeit des Filmes. In dieser Folie wird die Sauerstoffbarriere im wesentlichen durch den Anteil thermoplastisch verarbeitbarer Stärke bestimmt, währenddem die Wasserundurchlässigkeit durch den Anteil Polyolefin, wie beispielsweise Polyaethylen, einstellbar ist.

In Fig. 2 ist eine Einschichtfolie dargestellt, welche beidseitig durch eine Beschichtung 3 überdeckt ist. Im gezeigten Beispiel besteht die Schicht 1 aus thermoplastisch verarbeitbarer Stärke, währenddem die Beschichtungen 3 eine Aluminiumbeschichtung, eine Siliciumoxydbeschichtung oder eine Siloxanbeschichtung sein kann. Währenddem im Falle von Aluminium oder Siliciumoxyd die Schichtdicke 100 bis 400 A beträgt, ist die Schichtdicke der Siloxanbeschichtung in der Grössenordnung von 1 µ. Im Falle der Verwendung von Aluminium weist die gezeigte Folie eine hervorragende Sauerstoffundurchlässigkeit auf, und auch der Widerstand gegen Wasser ist hervorragend. Der Vorteil der Verwendung von Siliciumoxyd, wie beispielsweise Siliciummonoxyd, liegt darin, dass die Folie nach wie vor transparent ist. Hingegen ist die Wasser- und die Sauerstoffresistenz nicht derart hervorragend wie im Falle der Verwendung von Aluminium. Der Vorteil der Siloxanbeschichtung liegt in der hervorragenden Wasserresistenz der Folie.

Im Beispiel gemäss Fig. 3 ist eine Dreischichtfolie dargestellt, bestehend aus einer zentralen Schicht 1 sowie zwei peripheren Schichten 5. Die zentrale Schicht 1 besteht aus thermoplastisch verarbeitbarer Stärke, währenddem die beiden peripheren Schichten 5 aus Polyolefin, wie beispielsweise Polyaethylen, hergestellt sind. Zwischenliegend zwischen den Schichten 1 und 5 ist das Anbringen einer Zwischenschicht aus einem Blockcopolymer möglich, wie dies üblicherweise bei der Herstellung von Mehrschichtfolien vorgesehen wird.

Im gezeigten Beispiel ist die mittlere Schicht 1 verantwortlich für die Sauerstoffbarriere, währenddem die beiden Polyaethylenschichten die Wasserundurchlässigkeit der Folie gewährleisten. Die Schichtdicken sind dabei je nach Bedarf wählbar, d.h. zum Beispiel können die beiden Schichten 5 je 1 µm gewählt werden, währenddem die mittlere Schicht 17µm aufweist. Es ist aber durchaus auch möglich, die beiden äusseren Schichten 5 30µm dick zu wählen, währenddem die mittlere Schicht 60µm gewählt wird.

Das Beispiel gemäss Fig. 4 ist nahezu identisch mit der Folie gemäss Fig. 3, einzig die beiden peripheren Schichten 5 bestehen aus einem Polymer-Blend, der aus einem Polyolefin mit thermoplastisch verarbeitbarer Stärke hergestellt worden ist. Dabei richtet sich die Wasserresistenz der beiden peripheren Schichten 5 nach dem Gehalt des Polyolefines im Polymer-Blend. Diese Folie kann immer dann gewählt werden, wenn die Anforderungen an die Wasserundurchlässigkeit nicht zu hoch gesetzt sind. Der Vorteil dieser Folie liegt einerseits im Preis, da die Stärke um einiges billiger ist als das Polyaethylen, und anderseits in der Entsorgung, ist doch Stärke biologisch sehr leicht abbaubar, währenddem Polyaethylen verbrannt werden muss.

Fig. 5 schliesslich zeigt wiederum eine Dreischichtfolie, analog Fig. 4, die beidseits durch eine Beschichtung 3 beschichtet ist. Die Beschichtung 3 kann analog der Beschichtung 3 in Fig. 2 gewählt werden, d.h. sie kann aus Aluminium, Siliciumoxyd oder aus Silan bestehen.

Die in den Fig. 3 bis 5 dargestellten Beispiele einer erfindungsgemässen Folie sind selbstverständlich in x-beliebiger Art und Weise variierbar. So können selbstverständlich Zwei-, Vier-, Fünf- oder Mehrschichtfolien hergestellt werden. Auch ist es möglich, beispielsweise eine Folie nur einseitig zu beschichten.

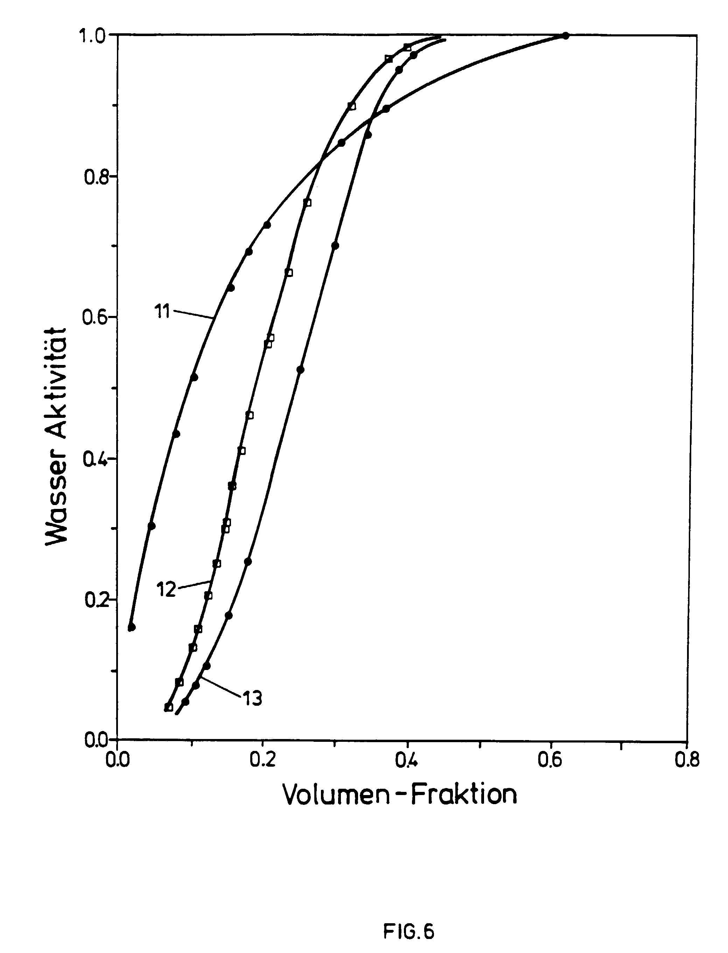

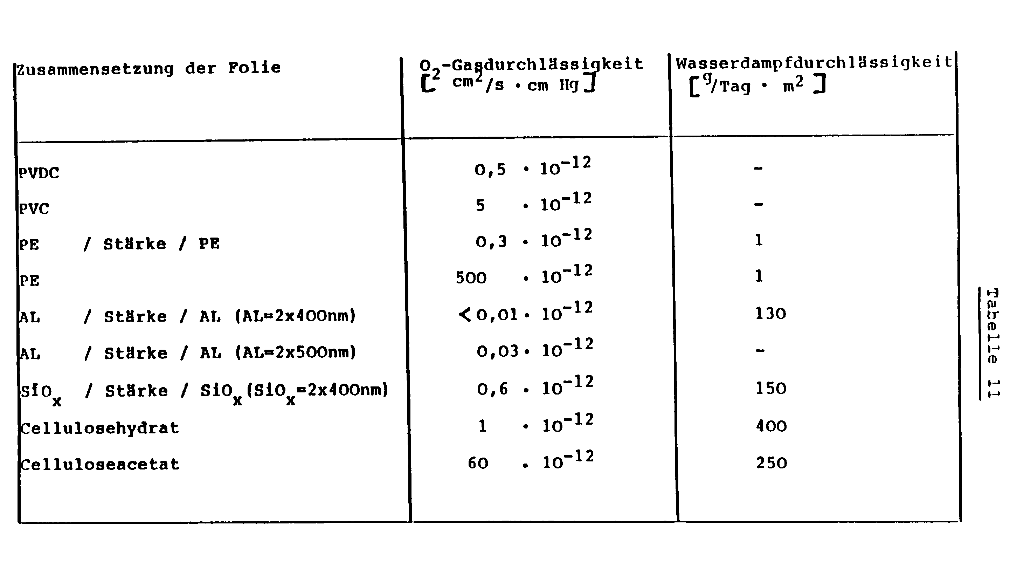

Anschliessend werden nun anhand von Beispielen und unter Bezug auf die Fig. 6 bis 11 die Herstellung thermoplastisch verarbeitbarer Stärke, von Polymer-Blends sowie von erfindungsgemässen Folien (Beispiel 6) näher beschrieben.

### A. Herstellung von thermoplastisch verarbeitbarer Stärke

### 1. Beispiel: Glycerinstärke

Kartoffelstärke und 36Gew% Glycerin, bezogen auf das Gesamtgewicht Glycerin/Stärke, wurden in einen Zweiwellenextruder eingefüllt. Das Gemisch wurde im Extruder bei ca. 160°C und unter Zuführen einer Deformationsenergie von 0,32 kWh/kg Stärke/Glyceringemisch intensiv gemischt, wobei die Schmelze gleichzeitig entgast wurde, um der Stärke das Wasser zu entziehen. Durch das Mischen der beiden Komponenten entsteht eine homogene Schmelze, die anschliessend abgezogen und granuliert werden kann. Der Wassergehalt der so homogenisierten thermoplastisch verarbeitbaren Stärke beträgt ca. 0,3Gew%.

Durch das Mischen und Homogenisieren der nativen Stärke mit Glycerin werden sämtliche Kristallite und Kristallstrukturen der nativen Stärke aufgebrochen, und die Stärke ist in der thermoplastisch verarbeitbaren Stärke weitgehendst amorph. Demgegenüber weist destrukturierte Stärke, welche nach bekannten Verfahren aus nativer Stärke durch Destrukturieren mit Wasser bei erhöhter Temperatur hergestellt worden ist, noch eine gewisse Kristallinität auf. Der Unterschied zwischen thermoplastisch verarbeitbarer Stärke und destrukturierter Stärke lässt sich beispielsweise anhand der Wasserdampfsorptionsisothermen darstellen.

Fig. 6 zeigt dabei je eine Wasserdampfsorptionsisotherme für thermoplastisch verarbeitbare Stärke wie auch für destrukturierte Stärke.

Die Wasserdampfsorptionsisotherme 11 zeigt die Wasseraufnahme von thermoplastisch verarbeitbarer Stärke, hergestellt gemäss Beispiel 1. Wesentlich an dieser Isotherme ist, dass sie keinen Inversionspunkt aufweist. Auch ist weiter zu bemerken, dass die Desorptionsisotherme mit der Absorptionsisotherme identisch ist. Kurve 12 zeigt die Wasserdampfsorptionsisotherme von destrukturierter Stärke, die mit 25% Wasser bei 125°C destrukturiert worden ist. Im Gegensatz zur Isotherme 11 zeigt die Kurve 12 zwei Inversionspunkte.

Kurve 13 stellt im weiteren die Desorptionsisotherme von destrukturierter Stärke dar, die nicht identisch ist mit der Wasserdampfsorptionskurve. Offensichtlich ist die Desorption verzögert im Vergleich zur Absorption.

Die Isothermen in Fig. 6 sind im übrigen bei 20°C gemessen worden.

Ein weiterer Unterschied zwischen thermoplastisch verarbeitbarer Stärke gemäss der vorliegenden Erfindung und destrukturierter Stärke liegt darin, dass auch bei fortgeschrittener Alterung die Wasserdampfsorptionsisotherme von thermoplastisch verarbeitbarer Stärke im wesentlichen gleich bleibt, währenddem sich diejenige von destrukturierter Stärke mit der Alterung ändert.

Thermoplastisch verarbeitbare Stärke unterscheidet sich weiter von mit Wasser destrukturierter Stärke durch einen unterschiedlichen Glasumwandlungspunkt. Der Glasumwandlungspunkt oder TG von thermoplastisch verarbeitbarer Stärke liegt unterhalb von Raumtemperatur, währenddem der TG der destrukturierten Stärke mit einem Wassergehalt < 18Gew% immer oberhalb 40°C liegt, wodurch das Material spröde ist. Bei mehr als 18Gew% Wasser ist die Stärke klebrig, wodurch das Material immer eine gewisse Flexibilität aufweist. Dieses Merkmal bleibt auch bei Alterung von thermoplastisch verarbeitbarer Stärke erhalten, währenddem bei destrukturierter Stärke sich mit der Alterung der Glasumwandlungspunkt derart erhöht, dass das Material nach einer gewissen Zeit spröde wird.

Ein weiteres Merkmal von thermoplastisch verarbeitbarer Stärke liegt im extrem niedrigen Wassergehalt, der normalerweise < 3,5Gew% beträgt, vorzugsweise < 1 Gew%.

### 2. Beispiel: Thermoplastisch verarbeitbare Stärke mit einem Aminoalkohol

### 2.1 Aethanolamin:

Native Stärke wurde während zwei Tagen im Trockenschrank bei 100°C getrocknet. Anschliessend wurden zwei Mischungen mit Aethanolamin hergestellt, und zwar eine Mischung mit 30Gew% Aethanolamin, bezogen auf das Gesamtgewicht der Mischung Stärke/Aethanolamin, sowie eine zweite Mischung mit 34Gew% Aethanolamin.

Beide Mischungen wurden anschliessend in einem Kneter bei 100°C homogenisiert, wobei bei der ersten Mischung das Drehmoment des Kneters derart gewählt wurde, dass eine Deformationsenergie von 0,3 kWh/kg Stärke/Aethanolmischung zugeführt wurde, währenddem der zweiten Mischung mittels Einstellung des Drehmomentes 0,34 kWh/kg Stärke/Aethanolmischung zugeführt wurden. Anschliessend wurden mit den beiden homogenisierten Massen Platten gepresst, und zwar während 15 Min. bei 100°C. Unter dem Mikroskop konnten bei beiden Platten keine unaufgeschlossenen Stärkekörner mehr festgestellt werden. Die beiden Plattenproben wurden anschliessend Biegetests unterzogen, wobei die erste Probe, enthaltend 30Gew% Aethanolamin infolge hoher Sprödigkeit sofort brach, währenddem die zweite Probe, beinhaltend 34Gew% Aethanolamin, infolge einer gewissen Flexibilität biegbar war.

Im weiteren zeigte sich auch, dass die Wassersorption der ersten Probe wesentlich höher war als die Wassersorption der zweiten biegbaren Probe.

### 2.2 3-Amino-1-Propanol

Wiederum wurde native Stärke während zwei Tagen im Trockenschrank bei 100°C getrocknet. Erneut wurden zwei Mischungen hergestellt, und zwar einerseits mit 32Gew% von 3-Amino-1-Propanol, bezogen auf das Gesamtgewicht der Mischung, wie anderseits mit 36Gew% von 3-Amino-1-Propanol, bezogen auf das Gesamtgewicht der Mischung.

Beide Mischungen wurden anschliessend wiederum bei 100°C in einem Kneter homogenisiert, wobei das Drehmoment des Kneters derart gewählt wurde, dass im ersten Fall eine Deformationsenergie von 0,29 kWh/kg Mischung und im zweiten Fall eine Deformationsenergie von 0,32 kWh/kg Mischung zugeführt wurden. Nach Homogenisierung der Massen wurden wiederum Platten gepresst, und zwar erneut während 15 Min. bei 100°C.

Anschliessende Biegetests zeigten, dass die Platte der ersten Mischung relativ spröde war und bereits bei kleinster Biegung zerbarst. Währenddem zeigte die zweite Probe eine erhöhte Flexibilität und barst erst nach starker Biegung. Wiederum zeigte die erste Probe eine erhöhte Wassersorption im Vergleich zur zweiten Probe.

Selbstverständlich sind die oben im ersten und zweiten Beispiel angeführten Mischungen und Verarbeitungsbedingungen nur als Beispiele aufzufassen, und selbstverständlich kann native Stärke auch bei anderem Gehalt des Zuschlagstoffes und bei anderen Verarbeitungstemperaturen thermoplastisch verarbeitbar gemacht werden. Es hat sich allerdings gezeigt, dass bei Verwendung von Glycerin die Zuschlagsmenge idealerweise 36 bis 38Gew%, bezogen auf das Gewicht der Gesamtmischung, beträgt.

Beim Zusatz von Aminoaethanol resp. Aethanolamin beträgt die Zuschlagsmenge idealerweise 35Gew%, beim Zusetzen von Aminopropanol idealerweise 34 bis 36Gew% und beim Zusetzen von Trishydroxylaethylaminomethan idealerweise 34 bis 36Gew%. Bei der zugeführten Deformationsenergie hat sich ein Idealwert von 0,32 kWh/kg Stärke/Zuschlagstoffmischung ergeben, wobei auch hier Abweichungen von diesem Wert zum Ziel führen.

### B. Herstellung eines Polymer-Blends

### 3. Beispiel: Polymer-Blend aus Polyaethylen und thermoplastisch verarbeitbarer Stärke:

Ausgegangen wurde von thermoplastisch verarbeitbarer Stärke resp. Glycerinstärke, wie sie in Beispiel 1 hergestellt worden ist.

Eine Mischung von 50Gew% Low-density Polyaethylen (LDPE), 40Gew% Glycerinstärke und 10Gew% eines Blockcopolymers (Orevac 18211 der Firma Ato Chemie) wurden gemischt und zusammen in einen Kneter eingegeben. Die Mischung wurde bei einer Temperatur von 160°C und unter Einbringen von 0,2 kWh/kg Gemisch compoundiert und anschliessend granuliert.

Mit dem so hergestellten Polymer-Blend, beinhaltend 40Gew% thermoplastisch verarbeitbare Stärke, wurden Normkärper gespritzt und einerseits die Wasseraufnahme und anderseits das Spannungs-/Dehnungsverhalten gemessen.

Die Formkörper wurden während 10 Stunden in kochendem Wasser gelagert, und anschliessend konnte eine Wasseraufnahme von maximal 2% nachgewiesen werden.

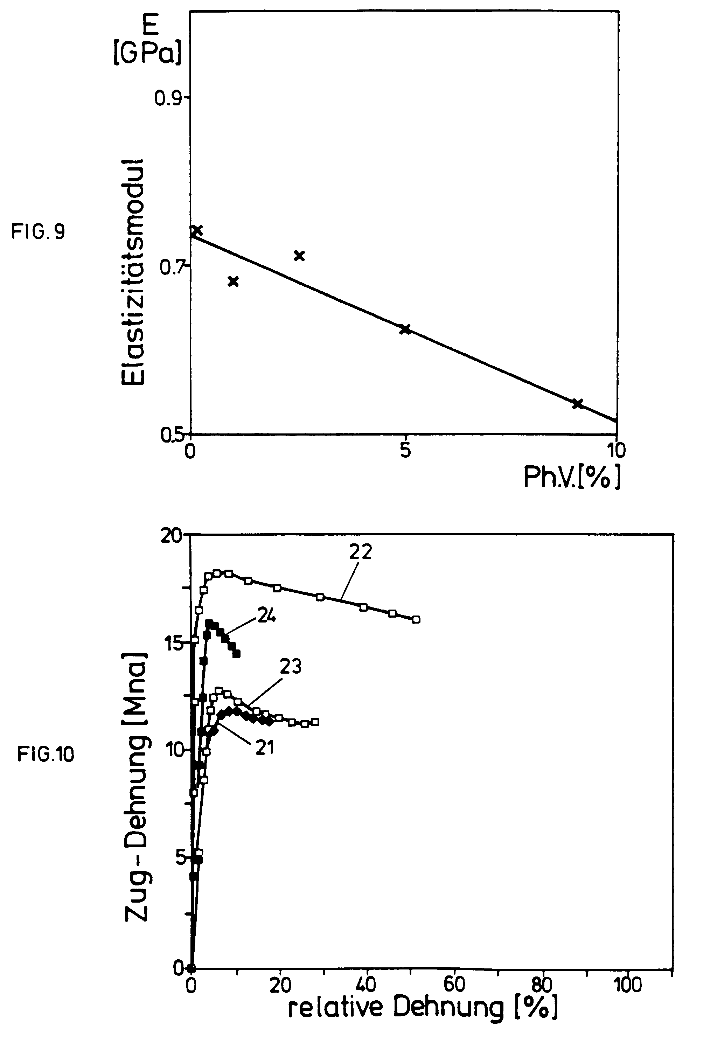

Das Spannungs-/Dehnungsverhalten wurde mittels einfachem Dehnungsversuch bei 20°C gemessen. Die entsprechend ermittelte Kurve ist in Fig. 10 dargestellt und mit dem Index 21 versehen. Auf die Diskussion der Spannungs-/Dehnungskurve wird später eingegangen.

Anschliessend wurde eine weitere Mischung, beinhaltend 70Gew% thermoplastisch verarbeitbare Stärke, 20% Polyaethylen und 10% Blockcopolymer im Kneter zum entsprechenden Polymer-Blend verarbeitet. Die Compoundierbedingungen wurden gleich gewählt, wie oben angeführt. Vom so hergestellten Polymer-Blend wurden wiederum Normkörper hergestellt zum Messen der Wasserresistenz. Die Normkörper wurden während 10 Stunden bei 70% Luftfeuchtigkeit und Raumtemperatur gelagert, ohne dass eine Deformation an der Oberfläche festgestellt werden konnte.

Hingegen konnte festgestellt werden, dass bei 100%iger Luftfeuchtigkeit, d.h. also im Kontakt mit flüssigem Wasser, die Oberfläche der Normkörper klebrig wurde.

Als Fazit aus den beiden hergestellten Polymer-Blends kann festgehalten werden, dass je nach Anforderungen an die Wasserresistenz die Zuschlagsmenge der Stärke, bezogen auf das Gesamtgewicht des Polymer-Blends, zu wählen ist, dass aber ein Wert von 70Gew% nicht überschritten werden soll. Offensichtlich muss noch so viel Polyaethylen im Polymer-Blend vorhanden sein, dass eine zusammenhängende Struktur des Polyaethylens im Blend gebildet wird. Falls eine gute Wasserresistenz erforderlich ist, sollte der Anteil thermoplastisch verarbeitbarer Stärke im Polymer-Blend 50Gew% nicht überschreiten.

In bezug auf den Phasenvermittler resp. den Blockcopolymer ist zu sagen, dass auch bereits eine Zuschlagsmenge von 2 bis 5Gew% eine gute Phasendurchmischung der beiden Polymere ergibt. Als Phasenvermittler kommen selbstverständlich auch andere Materialien, wie beispielsweise Lotader der Firma CDF-Chemie, Novatec der Firma Mitsubishi Chemicals, Surlyn der Firma DuPont, Lonply der Firma Mitsui Toatsu usw. in Frage. Bei den genannten Blockcopolymeren handelt es sich um Produkte, die üblicherweise beim Compoundieren von zweiphasigen Polymer-Blends verwendet werden.

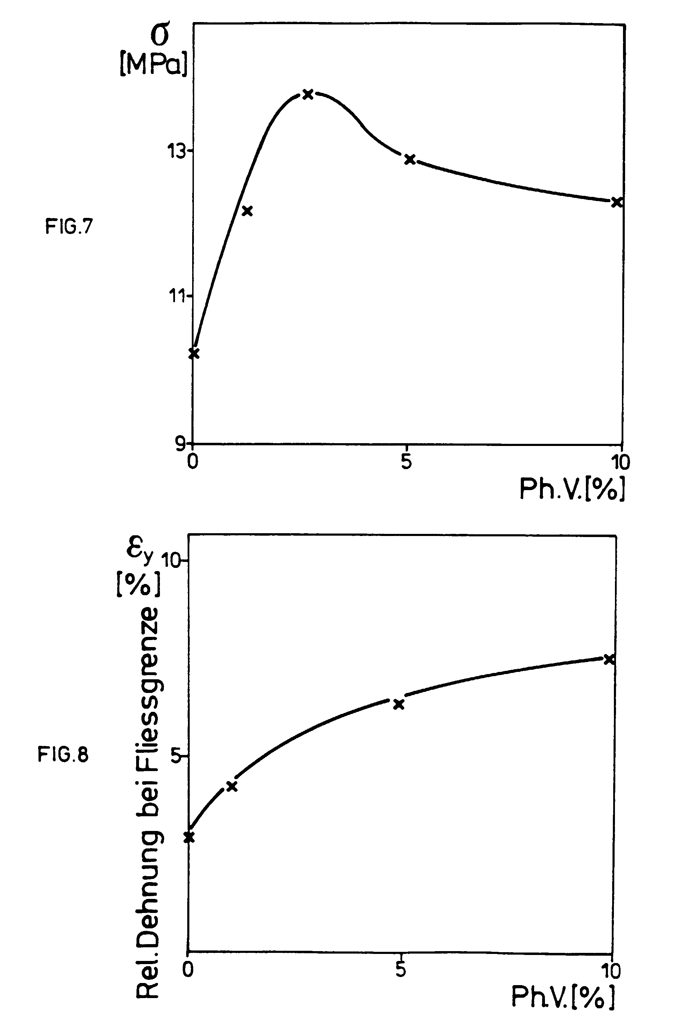

In den Fig. 7 bis 9 ist die Auswirkung der Menge des zugesetzten Phasenvermittlers einerseits auf die Spannung bei Fliessgrenze, auf die relative Dehnung bei Fliessgrenze sowie auf den Elastizitätsmodul dargestellt. Ausgegangen wurde von einem Polymer-Blend von 50 bis 60Gew% Polypropylen, 40Gew% thermoplastisch verarbeitbarer Stärke gemäss Beispiel 1 sowie 10 bis 0Gew% zugesetztem Phasenvermittler Lotader 3318.

In den Fig. 7 bis 9 sind die Auswirkungen von unterschiedlich zugesetzter Menge an Phasenvermittler dargestellt. In Fig. 7 ist die Spannung bei Fliessgrenze dargestellt, welche bei ca. 3Gew% zugesetztem Phasenvermittler ein Optimum durchläuft, um dann ab ca. 5Gew% einen mehr oder weniger konstanten Wert einzunehmen.

Dasselbe ist bei der relativen Dehnung bei Fliessgrenze in Fig. 8 festzustellen, wo ebenfalls der Wert ab ca. 5% zugesetztem Phasenvermittler mehr oder weniger konstant verläuft.

Demgegenüber nimmt der Elastizitätsmodul linear ab mit zugesetzter Menge an Phasenvermittler.

### 4. Beispiel: Polymer-Blend aus thermoplastisch verarbeitbarer Stärke und Polypropylen

Ausgegangen wurde wiederum von Glycerinstärke, wie in Beispiel 1 hergestellt. 40Gew% der Glycerinstärke wurden mit 50Gew% von Polypropylen und 10Gew% von Lotader 2400 der CDF Chemie miteinander gemischt und in einen Kneter gegeben. Das verwendete Polypropylen wies einen Schmelzindex (MFI) von 20g/10sec. bei 190°C und einer Last von 5,61 kg auf. Die Mischung wurde bei 190°C und 0,2 kWh/kg Mischung im Kneter gemischt und anschliessend granuliert. Wiederum wurden Normkörper gespritzt und mittels Dehnversuchen bei 20°C das Spannungs-/Dehnungsverhalten gemessen.

Die entsprechende Spannungs-/Dehnungskurve ist ebenfalls in Fig. 7 dargestellt und mit dem Index 22 bezeichnet.

### Diskussion von Fig. 10:

Fig. 10 zeigt ein Spannungs-/Dehnungsdiagramm, wobei verschiedene Testkörper Dehnungsversuchen bei 20°C unterzogen worden sind.

Dabei wurden Normkörper, hergestellt aus Polymer-Blends mit Polyaethylen und Polypropylen, wie oben erwähnt, mit Normkörpern, hergestellt aus reiner thermoplastisch verarbeitbarer Stärke, verglichen. Kurve 21 zeigt das Spannungs-/Dehnungsverhalten eines Polymer-Blends mit Polyaethylen und 40Gew% an thermoplastisch verarbeitbarer Stärke und Kurve 22 einen Polymer-Blend mit Polypropylen und 40Gew% an thermoplastisch verarbeitbarer Stärke.

Zum Vergleich sind zwei Spannungs-/Dehnungskurven von Stärkeproben ebenfalls in Fig. 10 eingezeichnet, bezeichnet mit den Indexzahlen 23 und 24.

Kurve 23 zeigt die Spannungs-/Dehnungskurve einer thermoplastisch verarbeitbaren Stärke mit 30Gew% Glycerin, der bei Herstellung im Kneter 0,32 kWh/kg Stärke-/Glycerinmischung zugeführt worden sind.

Letztendlich Kurve 24 bezieht sich auf die thermoplastisch verarbeitbare Stärke, wie sie in Beispiel 1 hergestellt worden ist, d.h. mit 36Gew% Glycerin.

Beim Vergleich der 4 Kurven zeigt sich deutlich, dass die Probe 23 die niedrigste Festigkeit aufweist.

Demgegenüber zeigt Probe 24 eine erhöhte Festigkeit, allerdings findet Abriss bereits bei einer relativ kurzen Dehnung von ca. 12% statt.

Das Spannungs-/Dehnungsverhalten der Proben 21 und 23 ist in etwa identisch, währenddem die Proben 22 und 24 eine hohe Zugfestigkeit aufweisen mit einer ausgeprägt hohen Fliessgrenze.

Als Fazit daraus kann geschlossen werden, dass beim Herstellen von Polymer-Blends, insbesondere mit Polyaethylen, die Zugfestigkeit in etwa vergleichbar ist mit derjenigen von reiner thermoplastisch verarbeitbarer Stärke. Da insbesondere Kurve 24 sogar eine höhere Zugfestigkeit aufweist als Kurve 21, besteht die Vermutung, dass durch das Einarbeiten von thermoplastisch verarbeitbarer Stärke in Polyaethylen die mechanischen Eigenschaften, bezogen auf reines Polyaethylen, nicht verschlechtert werden. Voraussetzung dafür ist allerdings, dass die Plastifizierung der Stärke entsprechend den erfindungsgemäss geforderten Verarbeitungsbedingungen erfolgt ist.

Ergänzend wäre noch festzuhalten, dass der Riss der Proben aus den beiden Polymer-Blends bei einer wesentlich höheren Dehnung stattfindet als bei den reinen Stärkeproben.

### C. Folienherstellung

### 5. Beispiel: Herstellung einer Einschichtstärkefolie

Ausgegangen wurde von einer thermoplastisch verarbeitbaren Stärke mit einem Glyceringehalt von 35,6Gew% und einem Wassergehalt von 0,5Gew%, bezogen auf das Gesamtgewicht der Stärkemischung.

Die Stärke wurde in einem Einwellenextruder mit einem L/D-Verhältnis von 30 und in einem Temperaturbereich von 180°C bis 200°C aufgeschmolzen, der mit einer Drehzahl von 110 Umdrehungen/min. und einem Druck von 90 bis 120 bar betrieben worden ist. Als Massetemperatur wurden 212°C gemessen. In einer Schlitzdüse mit 170°C wurde eine klare, durchsichtige Folie gezogen, wobei die Abzugsgeschwindigkeit bis 12 m/min betrug, und die Abzugswalzen wurden auf 15°C gekühlt. Im Einwellenextruder wurde weiter eine Siebplatte mit verschiedenen Filtersieben verwendet zur Erhöhung der Homogenität der Schmelze und um Verunreinigungen von der Düse fernzuhalten.

Beim Herstellen der Folie hat sich gezeigt, dass die Verweilzeit der Stärke im Extruder von 3 Min. nicht überschritten werden darf. Bei mehr als 3 Min. Verweilzeit im Extruder wurde die Stärke offensichtlich abgebaut, und die abgezogene Folie wurde braun gefärbt. Im weiteren ist es wichtig, dass das Stärkegranulat vor dem Extrudieren nicht zu lange (mehr als 5 Std.) an der Luft stehen bleibt, da es ansonsten Wasser aufnimmt und in der Folie somit Dampfblasen entstehen können. Durch Variierung der Abzugsgeschwindigkeit konnten Schichtdicken der Stärke folie von 9 bis 270µ hergestellt werden.

### 6. Beispiel: Dreischichtfolie

Hergestellt wurde eine Dreischichtfolie, bestehend aus Low-density Polyaethylen/Stärke/Low-density Polyaethylen. Als Stärke wurde die in Beispiel 1 hergestellte thermoplastisch verarbeitbare Glycerinstärke verwendet, mit einem Wassergehalt von 0,3Gew%.

Zusätzlich zum im Beispiel 5 verwendeten Einwellenextruder wurde ein weiterer Einwellenextruder mit einer Kompression von 1 : 3 und einem L/D-Verhältnis von 28 gewählt. Die Temperaturen am weiteren Extruder wurden von 180°C bis 190°C eingestellt, und gearbeitet wurde mit einem Druck von 180 bar sowie einer Drehzahl von ca. 40U/min., wodurch sich eine Massetemperatur des Polyaethylens von 230°C einstellte. Der Durchsatz betrug 10kg/h.

Die Dreischichtfolie wurde mittels eines Blaskopfes abgezogen, und im vorliegenden Beispiel wurde auf eine Zwischenschicht aus einem Blockcopolymer verzichtet. Selbstverständlich ist es für die Erzielung einer ausgezeichneten Haftung zwischen den drei Schichten von Vorteil, eine Blockcopolymer-Zwischenschicht zu verwenden. Geeignet sind sämtliche Blockcopolymere, wie sie bereits in den Beispielen 2 und 3 aufgeführt worden sind. Möglich sind auch andere Haftverbesserungsverfahren, wie beispielsweise Coronabehandlung, Ozonisierung.

Die in den Beispielen 5 und 6 hergestellten Folien wurden einerseits zur Ermittlung der Gasdurchlässigkeit als auch der Feuchtigkeitsdurchlässigkeit verwendet, deren Werte in Tabelle 11 zusammengefasst sind. Im weiteren wurden diese Folien gemäss den nachfolgenden Beispielen mit Beschichtungen versehen.

### D. Bedampfen der Stärkefolien

### 7. Beispiel: Bedampfen mit Aluminium

Eine Stärkefolie mit einer Schichtdicke von 50µ, hergestellt gemäss 5. Beispiel, wurde im Hochvakuum mit Aluminium bedampft. Gewählt wurde eine Aluminiumdampfdruckatmosphäre von 6 x 10⁻⁴ Torr, wobei die Beschichtung der Stärkefolie beidseits während 20 min. erfolgte. Die während dieser Zeit aufgebaute Schicht betrug je 400nm resp. insgesamt 800nm oder 0,8µm,

Eine weitere Stärkefolie wurde unter denselben Bedingungen beidseits während 24 min. mit Aluminium bedampft, wodurch sich je eine Schicht von 500nm resp. insgesamt eine Schicht von 1000nm aufgebaut hatte.

Die beiden so hergestellten aluminiumbedampften Stärkefolien wurden anschliessend Gasdurchlässigkeitsund Feuchtigkeitsdurchlässigkeitsprüfungen unterzogen, deren Werte in Tabelle 11 zusammengefasst sind.

### 8. Beispiel: Bedampfen mit Siliciumoxyd

Analog dem obigen Beispiel wurde eine Stärkefolie mit einer Dicke von 50µ verwendet, die gemäss Beispiel 5 hergestellt worden ist. Die Stärkefolie wurde beidseits im Hochvakuum mit Siliciumoxyd bedampft, wobei Silicium mittels Lichtbogen in einer Sauerstoffatmosphäre von 4 x 10⁻⁴ Torr verdampft wurde. Die Beschichtung der Stärkefolie erfolgte während 100 min., worauf sich beidseits der Folie je eine Schicht von 400nm aufgebaut hatte.

Bei einer Beschichtungszeit von 150 min. unter denselben Bedampfungsbedingungen ergab sich eine Schichtdicke von je 600nm der Siliciumoxydschicht.

Wiederum wurden von den so hergestellten Siliciumoxyd-bedampften Stärke folien Gasdurchlässigkeits- und Feuchtigkeitsdurchlässigkeitstests durchgeführt, deren Werte in Tabelle 11 zusammengefasst sind.

### Diskussion von Tabelle 11

Für Tabelle 11 wurden von verschiedenen, vorab erfindungsgemässen Folien die Sauerstoffgasdurchlässigkeit gemessen sowie die Durchlässigkeit von Wasserdampf.

Zum Vergleich der erfindungsgemässen Folien wurden im weiteren Einschichtstärkefolien und Folien aus Celluloseacetat, Cellulosehydrat, Polyvinylidenchlorid (PVDC) sowie aus PVC in die Versuche miteingeschlossen.

In bezug zum Messen der Wasserdampfdurchlässigkeit ist im übrigen zu bemerken, dass diese bei 23°C gemessen worden ist und das Luftfeuchte-Gefälle im Falle der Aluminiumbeschichtung 100% relative Luftfeuchte, im Falle von Siliciumoxyd 75% relative Luftfeuchte und im Falle von Celluloseacetat, Cellulosehydrat und Polyaethylen 90% Luftfeuchte betrug.

In bezug auf die Gasdurchlässigkeit wurde die Sauerstoffdurchlässigkeit gemessen.

### Diskussion der Gasdurchlässigkeit

Als Referenzwerte sind diejenigen der PVDC- und PVC-Folie zu betrachten, die ja bekanntlich infolge ihrer geringen Sauerstoffdurchlässigkeit weit verbreitete Anwendung finden. Im Vergleich dazu zeigt der Wert der Polyaethylen-Folie eine sehr hohe Sauerstoffgasdurchlässigkeit, währenddem die Dreischichtfolie mit einer Stärkezwischenschicht eine Sauerstoffdurchlässigkeit aufweist, die mit derjenigen der PVDC-Folie zu vergleichen ist.

Die Sauerstoffdurchlässigkeit der aluminiumbedampften Stärkefolien ist um einen Faktor 10 kleiner als diejenige der PVDC-Folie oder der erwähnten Dreischichtfolie. Demgegenüber ist die Sauerstoffgasdurchlässigkeit der mit Siliciumoxyd bedampften Stärke folien etwas schlechter als diejenige der Dreischichtfolie, was möglicherweise auf ein nicht optimales Beschichten der Stärkefolie zurückzuführen ist. An sich sollte der Wert in etwa mit demjenigen der Dreischichtfolie übereinstimmen, welche eine Stärkezwischenschicht aufweist.

### Diskussion der Wasserdurchlässigkeit

Als Referenz ist hier der Wert der Polyaethylen-Folie zu betrachten, da ja bekanntlich Polyaethylen eine exzellente Feuchtigkeitsbarriere darstellt. Es zeigt sich denn auch, dass nur die Dreischichtfolie gemäss Beispiel 6, welche eine Stärkezwischenschicht aufweist, denselben exzellenten Wert aufweist wie reines Polyaethylen.

Demgegenüber ist die Wasserdampfdurchlässigkeit der mit Aluminium oder Siliciumoxyd bedampften Stärkefolien wesentlich schlechter, im Vergleich zu Cellulosehydrat und Celluloseacetat allerdings immer noch bedeutend besser.

Aus den Werten gemäss Tabelle 11 zeigt sich deutlich, welche Folienkonstruktion bei welchem Einsatz zu bevorzugen ist. Allerdings ist noch zu bemerken, dass mit Aluminium oder Siliciumoxyd bedampfte Stärkefolien gegenüber der Dreischichtfolie mit Polyaethylen den Vorteil aufweisen, dass sie biologisch vollständig und rasch abbaubar sind, da Aluminium beim Entsorgen zu Aluminiumoxyd wird und Siliciumoxyd zu Sand.

Der Vorteil von mit Siliciumoxyd bedampften Stärkefolien liegt darin, dass diese transparent sind.

Die in den Fig. 1 bis 11 und Beispielen 1 bis 8 dargestellten erfindungsgemässen Aspekte beziehen sich in jedem Fall auf Beispiele, die in einer x-beliebigen Art und Weise variiert resp. abgeändert werden können. Wesentlich dabei ist immer, dass die verwendete Stärke im wesentlichen vollständig thermoplastisch verarbeitbar ist und keine kristallinen Bereiche mehr aufweist.

## Patentansprüche

1. Mehrschichtfolie mit geringer Gaspermeabilität, gekennzeichnet durch mindestens eine Schicht, bestehend aus thermoplastisch verarbeitbarer Stärke, enthaltend mindestens 20 Gew.% eines Zuschlagstoffes sowie beidseits der einen Schicht je mindestens einer weiteren Schicht, die aus einem Polyolefin oder einem Polymerblend besteht, erhältlich durch Mischen von thermoplastisch verarbeitbarer Stärke, enthaltend mindestens 20 Gew.% eines Zuschlagstoffes, mit einem Polyolefin.

2. Folie nach Anspruch 1, dadurch gekennzeichnet, dass der Polymerblend in der mindestens einen weiteren Schicht durch Mischen von thermoplastisch verarbeitbarer Stärke mit Polyaethylen und/oder Polypropylen sowie einem Phasen- oder Haftvermittler zwischen den mindestens zwei Polymeren erhalten wird.

3. Folie nach einem der Ansprüche 1 oder 2, dadurch gekennzeichnet, dass zwischen der mindestens einen Schicht und je der einen weiteren Schicht eine Zwischenschicht aus einem Blockcopolymer als Phasen- oder Haftvermittler zwischen den Schichten vorgesehen ist.

4. Folie nach einem der Ansprüche 1 bis 3, dadurch gekennzeichnet, dass die Folie mindestens auf einer Seite eine Aluminium- oder eine Siliciumoxydbeschichtung aufweist.

5. Folie nach einem der Ansprüche 1 bis 3, dadurch gekennzeichnet, dass die Folie mindestens auf einer Seite eine Siloxanbeschichtung aufweist, die mindestens teilweise mit sich selbst und/oder mit der Stärke vernetzt ist.

6. Folie nach einem der Ansprüche 1 bis 5, dadurch gekennzeichnet, dass die thermoplastisch verarbeitbare Stärke Borax, Magnesium-2+Ionen und/oder Kalzium-2+Ionen und/oder andere mehrwertige Kationen umfasst.

7. Folie nach einem der Ansprüche 1 bis 6, dadurch gekennzeichnet, dass der Anteil thermoplastisch verarbeitbarer Stärke im Polymerblend bis zu maximal 70 Gew.% beträgt.

8. Folie nach einem der Ansprüche 1 bis 7, dadurch gekennzeichnet, dass der Polymerblend 30 - 70 Gew.% thermoplastisch verarbeitbare Stärke beinhaltet sowie weiter einen Phasenvermittler, bei welchem es sich um ein Blockcopolymer handelt.

9. Folie nach einem der Ansprüche 1 bis 8, dadurch gekennzeichnet, dass der Zuschlagstoff mindestens eine der nachfolgenden Substanzen umfasst:
Glycerin, ein Aminoalkohol, DMSO, N-Methylacetamid und/oder Harnstoff.

10. Folie nach einem der Ansprüche 1 bis 9, dadurch gekennzeichnet, dass der Anteil Zuschlagstoff in der thermoplastisch verarbeitbaren Stärke 25 - 40 Gew.% beträgt.

11. Verfahren zur Herstellung einer Mehrschichtfolie nach einem der Ansprüche 1 bis 10, dadurch gekennzeichnet, dass die Folie mittels Breitschlitzkaschieren oder Blaskoextrusion von mindestens drei Schichten hergestellt wird, wobei die mindestens eine Schicht ausgehend von thermoplastisch verarbeitbarer Stärke mit einem Wassergehalt < 3,5 Gew.% hergestellt wird, welche beidseits durch je eine weitere Schicht überdeckt wird, bestehend aus einem Polyolefin und/oder einem Polymerblend aus thermoplastisch verarbeitbarer Stärke und einem Polyolefin.

12. Verfahren nach Anspruche 11, dadurch gekennzeichnet, dass die Folie mindestens auf einer Seite mit einem Siloxanmonomer, beschichtet wird und anschliessend mit einer Elektronenstrahlkanone behandelt wird, wodurch das Siloxan mit sich selbst und teilweise mit der Stärke an der Oberfläche der Folie vernetzt wird.

13. Verfahren nach Anspruche 11, dadurch gekennzeichnet, dass die Folie mindestens auf einer Seite im Hochvakuum mittels Aluminium- oder einem Siliciumoxyd bedampft wird.

14. Verfahren nach einem der Ansprüche 11 bis 13, dadurch gekennzeichnet, dass der Wassergehalt der thermoplastisch verarbeitbaren Stärke bei der Herstellung der Folie < 1 Gew.% beträgt.

15. Verfahren zur Herstellung eines Polymerblends für eine Mehrschichtfolie nach einem der Ansprüche 1 oder 10, dadurch gekennzeichnet, dass Polyaethylen oder Polypropylen, mit 30 bis 70Gew% thermoplastisch verarbeitbarer Stärke, bezogen auf das Gesamtgewicht des Polymerblends, in einem Kneter oder Extruder in einem Temperaturbereich von 150 bis 200°C, je nach Schmelzbereich des gewählten Polyolefins, verarbeitet wird, wobei der Mischung ein Phasenvermittler zugegeben wird, bei welchem es sich um ein Blockcopolymer handelt.

## Claims

1. A multilayer film having low gas permeability, characterised by at least one layer, consisting of thermoplastically processable starch, containing at least 20% by weight of an additive and at least one additional layer on either side of the one layer, which additional layer consists of a polyolefin or a polymer blend, obtainable by mixing thermoplastically processable starch, containing at least 20% by weight of an additive, with a polyolefin.

2. A film according to Claim 1, characterised in that the polymer blend in the at least one additional layer is obtained by mixing thermoplastically processable starch with polyethylene and/or polypropylene and a phase promoter or adhesion promoter between the at least two polymers.

3. A film according to one of Claims 1 or 2, characterised in that between the at least one layer and each of the one additional layers an intermediate layer consisting of a block copolymer is provided between the layers as a phase promoter or adhesion promoter.

4. A film according to one of Claims 1 to 3, characterised in that the film has at least on one side an aluminium or a silicon oxide coating.

5. A film according to one of Claims 1 to 3, characterised in that the film has at least on one side a siloxane coating, which is at least partly cross-linked with itself and/or with the starch.

6. A film according to one of Claims 1 to 5, characterised in that the thermoplastically processable starch comprises borax, magnesium-2+ ions and/or calcium-2+ ions and/or other polyvalent cations.

7. A film according to one of Claims 1 to 6, characterised in that the content of thermoplastically processable starch in the polymer blend is up to a maximum of 70% by weight.

8. A film according to one of Claims 1 to 7, characterised in that the polymer blend contains 30 - 70% by weight thermoplastically processable starch and additionally a phase promoter, which is a block copolymer.

9. A film according to one of Claims 1 to 8, characterised in that the additive contains at least one of the following substances:
glycerol, an amino alcohol, DMSO, N-methylacetamide and/or urea.

10. A film according to one of Claims 1 to 9, characterised in that the proportion of additive in the thermoplastically processable starch is 25 - 40% by weight.

11. A method for the production of a multilayer film according to one of Claims 1 to 10, characterised in that the film is produced from at least three layers by means of wide-nozzle lamination or coextrusion blow moulding, the at least one layer being produced starting from thermoplastically processable starch having a water content of < 3.5% by weight, which is covered on both sides by one additional layer each, consisting of a polyolefin and/or a polymer blend of thermoplastically processable starch and a polyolefin.

12. A method according to Claim 11, characterised in that the film is coated at least on one side with a siloxane monomer, and then is treated with an electron ray gun, which causes the siloxane to be cross-linked with itself and partially with the starch on the surface of the film.

13. A method according to Claim 11, characterised in that the film is subjected to vapour deposition at least on one side in a high vacuum by means of aluminium oxide or a silicon oxide.

14. A method according to one of Claims 11 to 13, characterised in that the water content of the thermoplastically processable starch in the production of the film is < 1% by weight.

15. A method for the production of a polymer blend for a multilayer film according to one of Claims 1 or 10, characterised in that polyethylene or polypropylene is processed with 30 to 70% by weight thermoplastically processable starch, relative to the total weight of the polymer blend, in a kneader or extruder in a temperature range of 150 to 200°C, depending on the melting range of the polyolefin selected, with a phase promoter being added to the mixture, which phase promoter is a block copolymer.

## Revendications

1. Feuille multicouche présentant une faible perméabilité aux gaz, caractérisée par au moins une couche qui est composée d'amidon apte à subir une transformation thermoplastique et contenant au moins 20 % en poids d'une matière de charge, et, de chaque côté de la première couche, par au moins une seconde couche qui est composée d'une polyoléfine ou d'un mélange de polymères pouvant être obtenu grâce au mélange d'amidon apte à subir une transformation thermoplastique et contenant au moins 20 % en poids d'une matière de charge, avec une polyoléfine.

2. Feuille selon la revendication 1, caractérisée en ce que le mélange de polymères contenu dans la ou les secondes couches est obtenu grâce au mélange d'amidon apte à subir une transformation thermoplastique avec du polyéthylène et/ou du polypropylène et avec un intermédiaire de phases ou un agent adhésif entre les polymères.

3. Feuille selon la revendication 1 ou 2, caractérisée en ce qu'il est prévu, entre la ou les premières couches et la ou les secondes couches, une couche intermédiaire composée d'un copolymère séquencé qui sert d'intermédiaire de phases ou d'agent adhésif entre les couches.

4. Feuille selon l'une des revendications 1 à 3, caractérisée en ce qu'elle comporte au moins sur un côté un revêtement en aluminium ou en oxyde de silicium.

5. Feuille selon l'une des revendications 1 à 3, caractérisée en ce qu'elle comporte au moins sur un côté un revêtement en siloxane qui est réticulé au moins en partie avec lui-même et/ou avec l'amidon.

6. Feuille selon l'une des revendications 1 à 5, caractérisée en ce que l'amidon apte à subir une transformation thermoplastique contient du borax, des ions magnésium 2+ et/ou des ions calcium 2+ et/ou d'autres cations polyvalents.

7. Feuille selon l'une des revendications 1 à 6, caractérisée en ce que la proportion d'amidon apte à subir une transformation thermoplastique contenue dans le mélange de polymères est au maximum de 70 % en poids.

8. Feuille selon l'une des revendications 1 à 7, caractérisée en ce que le mélange de polymères contient 30 à 70 % en poids d'amidon apte à subir une transformation thermoplastique ainsi qu'un intermédiaire de phases qui consiste en un copolymère séquence.

9. Feuille selon l'une des revendications 1 à 8, caractérisée en ce que la matière de charge contient l'une au moins des substances suivantes : glycérine, amino-alcool, diméthylsulfoxyde, N-méthylacétamide et/ou urée.

10. Feuille selon l'une des revendications 1 à 9, caractérisée en ce que la proportion de matière de charge contenue dans l'amidon apte à subir une transformation thermoplastique est de 25 à 40 % en poids.

11. Procédé pour la fabrication d'une feuille multicouche selon l'une des revendications 1 à 10, caractérisé en ce qu'on fabrique la feuille par stratification à filière plate ou par coextrusion-soufflage d'au moins trois couches, étant précisé que la ou les premières couches sont fabriquées à partir d'amidon apte à subir une transformation thermoplastique et ayant une teneur en eau < 3,5 % en poids, laquelle ou lesquelles sont couvertes de chaque côté par une seconde couche composée d'une polyoléfine et/ou d'un mélange de polymères composé d'amidon apte à subir une transformation thermoplastique et d'une polyoléfine.

12. Procédé selon la revendication 11, caractérisé en ce que la feuille est couverte sur au moins un côté avec un siloxane monomère et est ensuite traitée avec un canon électronique, moyennant quoi le siloxane est réticulé avec lui-même et partiellement avec l'amidon, à la surface de la feuille.

13. Procédé selon la revendication 11, caractérisé en ce que sur au moins un côté, la feuille est métallisée sous vide poussé avec de l'aluminium ou un oxyde de silicium.

14. Procédé selon l'une des revendications 11 à 13, caractérisé en ce que la teneur en eau de l'amidon apte à subir une transformation thermoplastique est < 1 % en poids lors de la fabrication de la feuille.

15. Procédé pour la fabrication d'un mélange de polymères pour une feuille multicouche selon la revendication 1 ou 10, caractérisé en ce qu'on traite dans un malaxeur ou une extrudeuse du polyéthylène ou du polypropylène avec 30 à 70 % en poids d'amidon apte à subir une transformation thermoplastique, par rapport au poids total du mélange de polymères, dans une plage de température de 150 à 200°C, suivant le domaine de fusion de la polyoléfine choisie, en ajoutant au mélange un intermédiaire de phases qui consiste en un copolymère séquencé.
